(19) Europäisches Patentamt
European Patent Office
Office européen des brevets

(11) **EP 2 291 618 B1**

(12) **EUROPÄISCHE PATENTSCHRIFT**

(45) Veröffentlichungstag und Bekanntmachung des Hinweises auf die Patenterteilung:
**28.01.2015 Patentblatt 2015/05**

(51) Int Cl.:
***G01D 5/244*** *(2006.01)*

(21) Anmeldenummer: **10715541.8**

(22) Anmeldetag: **23.04.2010**

(86) Internationale Anmeldenummer:
**PCT/EP2010/055438**

(87) Internationale Veröffentlichungsnummer:
**WO 2010/122146 (28.10.2010 Gazette 2010/43)**

(54) **VERFAHREN UND VORRICHTUNG ZUM BESTIMMEN EINES ROTORWINKELS EINER ROTIERENDEN WELLE**

METHOD AND DEVICE FOR DETERMINING A ROTOR ANGLE OF A ROTATING SHAFT

PROCÉDÉ ET DISPOSITIF POUR DÉTERMINER L'ANGLE ROTORIQUE D'UN ARBRE EN ROTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.04.2009 DE 102009019509**

(43) Veröffentlichungstag der Anmeldung:
**09.03.2011 Patentblatt 2011/10**

(73) Patentinhaber: **Lenze Automation GmbH**
**31855 Aerzen (DE)**

(72) Erfinder:
• **DÜSTERBERG, Dirk**
**31860 Emmerthal (DE)**

• **HOHNSBEIN, Thorsten**
**31855 Aerzen (DE)**

(74) Vertreter: **Baumann, Jörg**
**Patentanwälte Ruff, Wilhelm, Beier, Dauster & Partner**
**Kronenstrasse 30**
**70174 Stuttgart (DE)**

(56) Entgegenhaltungen:
**EP-A1- 0 285 878    EP-A1- 0 308 656**
**GB-A- 2 001 222**

EP 2 291 618 B1

**Beschreibung**

Die Erfindung betrifft ein Verfahren und eine Vorrichtung zum Bestimmen eines Rotorwinkels einer rotierenden Welle.

Ein so genannter Resolver dient zur Messung eines Rotorwinkels einer rotierenden Welle und wird insbesondere als Positions- und/oder Drehzahlmesssystem für elektrische Antriebe verwendet. Ein Resolver umfasst üblicherweise eine erste Statorwicklung, eine zweite Statorwicklung, deren Wicklungsachse zur Wicklungsachse der ersten Statorwicklung in einem rechten Winkel steht, und eine Rotorwicklung, die mit der rotierenden Welle drehfest verbunden ist. Die beiden Statorwicklungen sind üblicherweise in einem Gehäuse eines Gebers fest angeordnet.

In der EP 0 285 878 A1 ist ein Verfahren zum Bestimmen eines Rotorwinkels einer rotierenden Welle mittels eines Resolvers beschrieben, bei dem eine erste Statorwicklung mit einer ersten Erregerwechselspannung mit einer Frequenz und einer ersten Phase beaufschlagt wird, darstellbar beispielsweise durch UE1=sin(ωt), und bei dem eine zweite Statorwicklung mit einer zweiten Erregerwechselspannung mit der Frequenz und einer zweiten Phase beaufschlagt wird, darstellbar beispielsweise durch cos(ωt), wobei sich die erste Phase und die zweite Phase um 90° unterscheiden.

An der Rotorwicklung ergibt sich eine Rotorwechselspannung UR, die durch die erste und die zweite Erregerwechselspannung UE1 und UE2 induziert wird, als

$$UR = sin(\omega t)^*cos(\varphi rotor)+cos(\omega t)^*sin(\varphi rotor)=sin(\omega t+\varphi rotor),$$

wobei φrotor den zu bestimmenden Rotorwinkel bezeichnet. Durch Messen einer Phasenverschiebung zwischen der ersten oder der zweiten Erregerwechselspannung UE1 oder UE2 und der Rotorwechselspannung UR lässt sich folglich der Rotorwinkel φrotor berechnen.

Die Phase φrotor der Rotorwechselspannung UR wird in der Praxis jedoch durch unterschiedliche Signallaufzeiten zusätzlich verändert, wodurch signifikante Messfehler verursacht werden können. Insbesondere eine temperaturabhängige Verzögerung der Rotorwechselspannung aufgrund von temperaturabhängigen Eigenschaften des Resolvers trägt wesentlich zu einem Messfehler bei.

Die GB 2 001 222 A zeigt ein Verfahren zum Bestimmen eines Rotorwinkels, bei dem Statorwicklungen eines Resolvers mit Erregerwechsel-spannungen beaufschlagt werden, deren Phasen sich statisch um 90° unterscheiden.

Der Erfindung liegt die technische Aufgabe zugrunde, ein Verfahren und eine Vorrichtung zum Bestimmen eines Rotorwinkels einer rotierenden Welle zur Verfügung zu stellen, die eine zuverlässige und möglichst messfehlerfreie Bestimmung des Rotorwinkels unabhängig von Laufzeiteffekten zu ermöglichen.

Die Erfindung löst diese Aufgabe durch ein Verfahren mit den Merkmalen des Anspruchs 1 und eine Vorrichtung mit den Merkmalen des Anspruchs 6.

Bevorzugte Ausführungsformen sind Gegenstand der Unteransprüche, deren Wortlaut hiermit durch Bezugnahme zum Inhalt der Beschreibung gemacht wird.

Bei dem erfindungsgemäßen Verfahren zum Bestimmen eines Rotorwinkels einer rotierenden Welle mittels eines Resolvers umfasst der Resolver eine erste Statorwicklung, eine zweite Statorwicklung, deren Wicklungsachse zur Wicklungsachse der ersten Statorwicklung in einem rechten Winkel steht, und eine Rotorwicklung, die mit der rotierenden Welle drehfest verbunden ist. Die erste Statorwicklung wird mit einer ersten Erregerwechselspannung mit einer Frequenz und einer ersten Phase beaufschlagt, beispielsweise darstellbar durch sin(ωt), und die zweite Statorwicklung wird mit einer zweiten Erregerwechselspannung mit der Frequenz und einer zweiten Phase beaufschlagt, beispielsweise darstellbar durch cos(ωt), wobei sich die erste Phase und die zweite Phase um 90° unterscheiden. Anschließend wird mindestens ein erster Phasenmesswert einer Phase einer Rotorwechselspannung gemessen, die in der Rotorwicklung durch die erste und die zweite Erregerwechselspannung induziert wird. Anschließend werden die erste Phase und/oder die zweite Phase derart geändert, dass sich die erste Phase und die zweite Phase um 270° unterscheiden. Beispielsweise kann hierzu die zweite Erregerwechselspannung, beispielsweise in Form der Spannung cos(ωt), mit -1 multipliziert werden, wodurch die zweite Erregerwechselspannung gegenüber ihrem vorherigen Zustand um 180° phasenverschoben wird, d.h. die erste Phase und die zweite Phase unterscheiden sich dann um 270°. Anschließend wird mindestens ein zweiter Phasenmesswert der Rotorwechselspannung gemessen und der Rotorwinkel in Abhängigkeit von dem mindestens einen ersten Phasenmesswert und dem mindestens einen zweiten Phasenmesswert bestimmt. Das erfindungsgemäße Verfahren, bei dem ein periodischer Wechsel bzw. ein periodisches Umschalten zwischen den Phasendifferenzwerten 90° und 270° der Erregerwechselspannungen erfolgt (selbstverständlich kann der Phasenwechsel auch in der Abfolge 270°, 90°, 270° ... erfolgen), ermöglicht eine Eliminierung von Laufzeitfehlern, da diejenigen Phasenanteile, die vom Rotorwinkel abhängen, durch die Phasenumschaltung ihr Vorzeichen wechseln, wohingegen diejenigen Phasenanteile, die auf Laufzeiteffekten beruhen, ihr Vorzeichen nicht verändern. Diejenigen Phasenanteile, die auf Laufzeitfehlern beruhen, können daher eliminiert werden, beispielsweise durch Subtraktion des ersten und des zweiten Phasenmesswerts.

In einer Weiterbildung umfassen die Schritte a) und b): a1) Ändern der ersten Phase und der zweiten Phase unter Beibehaltung der Phasenverschiebung von 90° zwischen der ersten und der zweiten Phase, b1) Messen eines zugehörigen ersten Phasenmesswerts, b2) Wiederholen der Schritte a1) und b1), bis der zugehörige erste Phasenmesswert 0° beträgt, und b3) Speichern der zugehörigen ersten Phase als ein erster Drehwinkel, umfassen die Schritte c) und d): c1) Invertieren der ersten Phase und Ändern der zweiten Phase derart, dass sich die erste Phase und die zweite Phase um 270° unterscheiden, d1) Messen eines zugehörigen zweiten Phasenmesswerts, d2) Ändern der ersten Phase und der zweiten Phase unter Beibehaltung der Phasenverschiebung von 270° zwischen der ersten und der zweiten Phase, d3) Wiederholen der Schritte d1) und d2), bis der zugehörige zweite Phasenmesswert 0° beträgt, und d4) Speichern der zugehörigen ersten Phase als ein zweiter Drehwinkel, und der Schritt e) umfasst: e1) Berechnen des Rotorwinkels in Abhängigkeit von dem ersten und dem zweiten Drehwinkel. Der Rotorwinkel kann beispielsweise dadurch berechnet werden, dass eine Differenz bzw. Summe zwischen bzw. aus dem ersten und dem zweiten Drehwinkel bestimmt wird. Die genannten Schritte reduzieren eine Einschwingzeit der Rotorwechselspannung nach dem Umschalten der Phasendifferenz zwischen den Erregerwechselspannungen von 90° auf 270°. Wenn die Erregerwechselspannungen, anders als in der genannten Weiterbildung, mit konstanten Phasen erzeugt werden, ergibt sich bei der Änderung der Phasendifferenz der Erregerwechselspannungen von 90° auf 270° bzw. von 270° auf 90° ein Phasensprung der induzierten Rotorwechselspannung, dessen Betrag vom aktuellen Rotorwinkel abhängt. In Abhängigkeit vom aktuellen Rotorwinkel kann daher am Umschaltzeitpunkt ein erheblicher Phasensprung der Rotorwechselspannung verursacht werden, wodurch vergleichsweise große Einschwingzeitdauern verursacht werden. Durch das Ändern der ersten Phase und der zweiten Phase unter Beibehaltung der Phasenverschiebung von 90° bzw. 270°, bis der zugehörige erste Phasenmesswert bzw. zweite Phasenmesswert 0° beträgt, ergibt sich im Umschaltzeitpunkt im Idealfall kein Phasensprung der Rotorwechselspannung, wodurch Einschwingzeitdauern wesentlich reduziert werden können.

In einer Weiterbildung des Verfahrens wird in Schritt e) eine Differenz zwischen dem zweiten Phasenmesswert und dem ersten Phasenmesswert gebildet, wobei der Rotorwinkel in Abhängigkeit von der gebildeten Differenz berechnet wird.

In einer Weiterbildung des Verfahrens wird in Schritt c) die Phase der zweiten Erregerwechselspannung um 180° geändert, beispielsweise durch Toggeln des Vorzeichens der zweiten Erregerwechselspannung. Alternativ kann selbstverständlich auch die Phase der ersten Erregerwechselspannung um 180° geändert werden.

In einer Weiterbildung wird zwischen den Schritten b) und c) aus dem ersten Phasenmesswert ein Rotorwinkel extrapoliert. Dies ist insbesondere dann sinnvoll, wenn die Welle rotiert, um durch Extrapolieren Rotorwinkel mit hoher zeitlicher Auflösung zur Verfügung zu stellen.

Die erfindungsgemäße Vorrichtung umfasst eine erste Statorwicklung, eine zweite Statorwicklung, deren Wicklungsachse zur Wicklungsachse der ersten Statorwicklung in einem rechten Winkel steht, eine Rotorwicklung, die mit der rotierenden Welle drehfest verbunden ist, eine erste Erregerwechselspannungsquelle, die dazu ausgebildet ist, eine erste Erregerwechselspannung mit einer Frequenz und einer ersten Phase zu erzeugen, wobei die erste Statorwicklung mit der ersten Erregerwechselspannung beaufschlagt ist, eine zweite Erregerwechselspannungsquelle, die dazu ausgebildet ist, eine zweite Erregerwechselspannung mit der Frequenz und einer zweiten Phase zu erzeugen, wobei sich die erste Phase und die zweite Phase um 90° unterscheiden und die zweite Statorwicklung mit der zweiten Erregerwechselspannung beaufschlagt ist, und eine Messeinrichtung, die dazu ausgebildet ist, mindestens einen ersten Phasenmesswert einer Phase einer Rotorwechselspannung, die in der Rotorwicklung durch die erste und die zweite Erregerwechselspannung induziert wird, zu messen. Die erste Erregerwechselspannungsquelle und/oder die zweite Erregerwechselspannungsquelle ist/sind dazu ausgebildet, die erste Phase und/oder die zweite Phase derart zu ändern, dass sich die erste Phase und die zweite Phase um 270° unterscheiden, die Messeinrichtung ist dazu ausgebildet, anschließend mindestens einen zweiten Phasenmesswert der Rotorwechselspannung zu messen, und es ist eine Berechungseinrichtung vorgesehen, die dazu ausgebildet ist, den Rotorwinkel in Abhängigkeit von dem ersten Phasenmesswert und dem zweiten Phasenmesswert zu berechnen.

Kurzbeschreibung der Zeichnungen

Vorteilhafte Ausführungsformen der Erfindung sind in den Zeichnungen schematisch dargestellt und werden nachfolgend beschrieben. Hierbei zeigt:

Fig. 1    ein Blockschaltbild einer Vorrichtung zur Messung eines Rotor-winkels einer rotierenden Welle und

Fig. 2    ein Blockschaltbild einer weiteren Vorrichtung zur Messung eines Rotorwinkels einer rotierenden Welle.

**Ausführungsbeispiele**

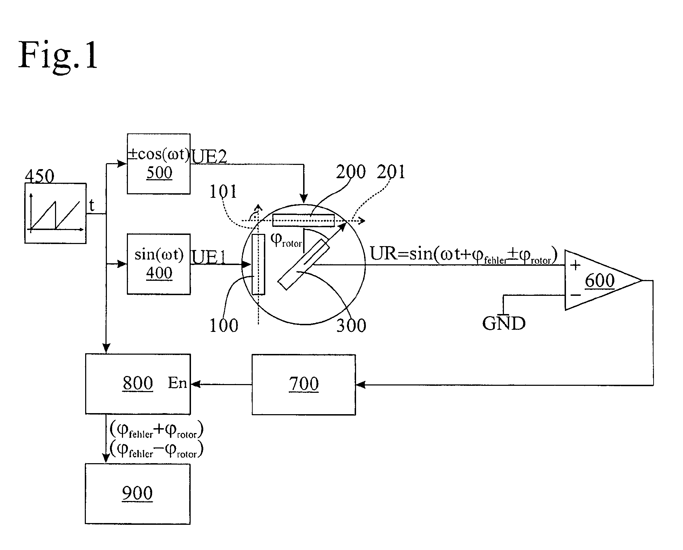

Fig. 1 zeigt eine Vorrichtung zur Messung eines Rotorwinkels φrotor einer nicht näher dargestellten rotierenden Welle, beispielsweise eines Elektromotors.

Die Vorrichtung, die einen Resolver bildet, umfasst eine erste Statorwicklung 100, eine zweite Statorwicklung 200, deren Wicklungsachse 201 zur Wicklungsachse 101 der ersten Statorwicklung 100 in einem rechten Winkel steht, eine Rotorwicklung 300, die mit der rotierenden Welle drehfest verbunden ist, eine erste Erregerwechselspannungsquelle 400, eine zweite Erregerwechselspannungsquelle 500, wobei sich die Erregerwechselspannungsquellen 400 und 500 einen Zähler 450 teilen, eine Messeinrichtung umfassend einen Komparator 600, einen Flankendetektor 700, der steigende und fallende Flanken detektiert, und ein Latch 800, sowie eine Berechnungseinrichtung 900.

Die erste Erregerwechselspannungsquelle 400 ist dazu ausgebildet, eine erste Erregerwechselspannung UE1=sin($2\pi$ft+φ)=sin(ωt+φ) mit einer Frequenz f und einer ersten Phase φ zu erzeugen, wobei die erste Statorwicklung 100 mit der ersten Erregerwechselspannung UE1 1 beaufschlagt ist.

Die zweite Erregerwechselspannungsquelle 500 ist dazu ausgebildet, eine zweite Erregerwechselspannung UE2=sin($2\pi$ ft+φ+$\pi$/2)=cos(ωt+φ) oder UE2=sin($2\pi$ ft+φ+$3\pi$/2)=-cos(ωt+φ)mit der Frequenz f und einer zweiten Phase φ+ $\pi$/2 bzw. φ+$3\pi$/2 zu erzeugen, wobei sich die erste Phase und die zweite Phase um $\pi$/2, d.h. 90°, oder $3\pi$/2, d.h. 270°, unterscheiden und die zweite Statorwicklung 200 mit der zweiten Erregerwechselspannung UE2 beaufschlagt ist.

Die Messeinrichtung 600, 700 und 800 ist dazu ausgebildet, eine Phasenverschiebung zwischen der ersten Erregerwechselspannung UR1 und einer Rotorwechselspannung UR zu messen, die in der Rotorwicklung 300 durch die erste und die zweite Erregerwechselspannung UE1 und UE2 induziert wird.

Die Berechungseinrichtung 900 ist dazu ausgebildet, den Rotorwinkel φrotor in Abhängigkeit von der gemessenen Phasenverschiebung zu berechnen.

Nachfolgend wird der Betrieb der in der Fig. 1 dargestellten Vorrichtung detailliert beschrieben. Hierzu sei zunächst vereinfachend angenommen, dass die erste Phase φ=0 ist.

Zunächst wird die erste Statorwicklung 100 mit der ersten Erregerwechselspannung UE1=sin(ωt) beaufschlagt und die zweite Statorwicklung 200 wird mit der zweiten Erregerwechselspannung UE2=cos(ωt) beaufschlagt. Zur Erzeugung der Erregerwechselspannungen UE1 und UE2 zählt der Zähler 450 beispielsweise periodisch von 0 bis n, wobei die Erregerwechselspannungsquellen 400 und 500 aus Kennlinienfeldern dem Zählerstand entsprechende Einträge auslesen, wodurch Sinus- bzw. Kosinusfunktion angenähert werden.

In der Rotorwicklung 300 wird durch die erste und die zweite Erregerwechselspannung UE1 und UE2 eine Rotorwechselspannung UR gemäß Gleichung (1) induziert:

$$UR = sin(\omega t + \phi fehler + \phi rotor) \qquad (1)$$

wobei φrotor den zu bestimmenden Rotorwinkel und φfehler einen auf Laufzeiten beruhenden Phasenfehler bezeichnen.

Mittels der Messeinrichtung umfassend den Komparator 600, den Flankendetektor 700 und das Latch 800 wird zunächst die Phasenverschiebung φfehler + φrotor zwischen der Rotorwechselspannung UR und der ersten Erregerwechselspannung UE1 als ein erster Phasenmesswert bestimmt und in der Berechungseinrichtung 900 gespeichert.

Anschließend wird die Phase der zweiten Erregerwechselspannung UE2 um $\pi$, d.h. 180°, verändert. Die zweite Erregerwechselspannung UE2 lässt sich folglich als -cos(ωt) darstellen. Die Phasen der Erregerwechselspannungen UE1 und UE2 unterscheiden sich nun um 270°. In der Rotorwicklung 300 wird darauf eine Rotorwechselspannung UR gemäß Gleichung (2) induziert:

$$UR = sin(\omega t + \phi fehler - \phi rotor) \qquad (2)$$

Mittels der Messeinrichtung 600, 700 und 800 wird jetzt die Phasenverschiebung φfehler - φrotor zwischen der Rotorwechselspannung UR und der ersten Erregerwechselspannung UE1 als ein zweiter Phasenmesswert bestimmt und in der Berechungseinrichtung 900 gespeichert.

Die Berechnungseinrichtung 900 bildet nun eine Differenz zwischen dem zweiten Phasenmesswert und dem ersten Phasenmesswert und teilt die gebildeten Differenz durch Zwei, um den Rotorwinkel φrotor zu berechnen. Die störenden Laufzeitfehler φfehler können folglich eliminiert werden.

Nach der Berechnung des Rotorwinkels φrotor wird die Phase der zweiten Erregerwechselspannung UE2

erneut um $\pi$, d.h. 180°, verändert. Die zweite Erregerwechselspannung UE2 lässt sich folglich wieder als cos($\omega$t) darstellen. Die oben beschriebenen Verfahrensschritte werden wiederholt als ein jeweiliger Bestimmungszyklus durchgeführt, um den aktuellen Rotorwinkel $\varphi$rotor fortlaufend zu ermitteln.

In einem jeweiligen Bestimmungszyklus wird die Phasenverschiebung zwischen den Erregerwechselspannungen UE1 und UE2 nach dem Messen des ersten Phasenmesswerts um 180° verändert, um anschließend einen zweiten Phasenmesswert bei der um 180° geänderten Phasenlage zu bestimmen. Dies ermöglicht die Eliminierung störender Laufzeiteffekte.

Bei der Änderung der Phasendifferenz zwischen den Erregerwechselspannungen UE1 und UE2 um 180° wird ein Phasensprung der induzierten Rotorwechselspannung UR verursacht, dessen Betrag vom aktuellen Rotorwinkel $\varphi$rotor abhängt. In Abhängigkeit vom aktuellen Rotorwinkel $\varphi$rotor kann daher am Umschaltzeitpunkt ein erheblicher Phasensprung der Rotorwechselspannung UR verursacht werden, wodurch vergleichsweise große Einschwingzeitdauern verursacht werden.

Um derartige Einschwingeffekte möglichst zu minimieren, kann wie folgt verfahren werden. Die erste Phase $\varphi$ der ersten Erregerwechselspannung UE1 und die zweite Phase $\varphi$+90° der zweiten Erregerwechselspannung UE2 werden unter Beibehaltung der Phasenverschiebung von 90° so lange verändert, bis der zugehörige erste Phasenmesswert der Rotorwechselspannung UR 0° beträgt, d.h. bis sich die Rotorwechselspannung UR darstellen lässt als UR=sin($\omega$t). Hierzu gehört eine erste Phase $\alpha'$ als ein erster Drehwinkel, d.h. UE1=sin($\omega$t-$\alpha'$) und UE2=cos($\omega$t-$\alpha'$). Der erste Drehwinkel $\alpha'$ wird gespeichert.

Anschließend wird die erste Phase invertiert und die zweite Phase derart geändert, dass sich die erste Phase und die zweite Phase um 270° unterscheiden, d.h. UE1=sin($\omega$t+$\alpha$) und UE2=-cos($\omega$t+$\alpha$). Der durch diese Phasenumschaltung der Erregerwechselspannungen UE1 und UE2 verursachte Phasensprung der Rotorwechselspannung UR ist wesentlich geringer als im oben beschriebenen Fall, bei dem lediglich das Vorzeichen der zweiten Erregerwechselspannung UE2 getoggelt wird. Im Idealfall ergibt sich kein Phasensprung der Rotorwechselspannung UR.

Anschließend werden die erste Phase und die zweite Phase unter Beibehaltung der Phasenverschiebung von 270° so lange verändert, bis der zugehörige zweite Phasenmesswert der Rotorwechselspannung UR 0° beträgt, d.h. bis sich die Rotorwechselspannung UR darstellen lässt als UR=sin($\omega$t). Hierzu gehört eine erste Phase $\alpha''$ als ein zweiter Drehwinkel, d.h. UE1=sin($\omega$t+$\alpha''$) und UE2=-cos($\omega$t+$\alpha''$). Der zweite Drehwinkel $\alpha''$ wird ebenfalls gespeichert.

Der Rotorwinkel $\varphi$rotor wird nun in der Berechungseinrichtung 900 in Abhängigkeit von dem ersten und dem zweiten Drehwinkel $\alpha'$ und $\alpha''$ berechnet, beispielsweise indem der erste und der zweite Drehwinkel $\alpha'$ und $\alpha''$ addiert werden und anschließend die Summe durch Zwei geteilt wird. Auch hier werden Laufzeitfehler kompensiert.

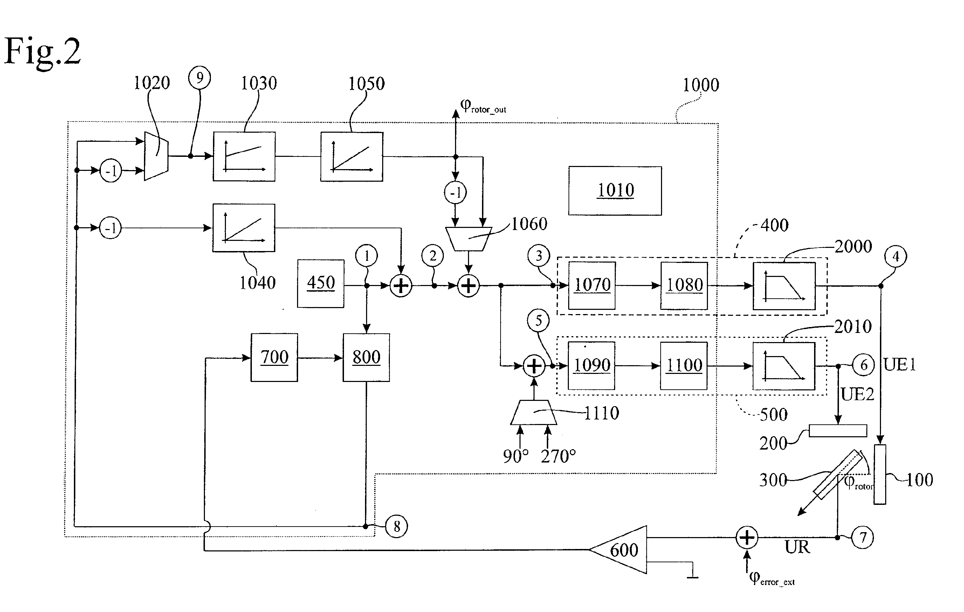

Fig. 2 zeigt ein Blockschaltbild einer weiteren Vorrichtung zur Messung eines Rotorwinkels einer rotierenden Welle. Elemente, deren Funktion der Funktion von in Fig. 1 gezeigten Elementen entspricht, sind mit identischen Bezugszeichen versehen.

Bei der in Fig. 2 gezeigten Ausführungsform sind einige Elemente in ein so genanntes Field Programmable Gate Array (FPGA) 1000 integriert. Das FPGA 1000 umfasst eine Zustandssteuereinheit 1010, einen Multiplexer 1020, ein PI-Glied 1030, ein I-Glied 1040, ein I-Glied 1050, einen Multiplexer 1060, Sinus-Tabellen 1070 und 1090, Modulatoren 1080 und 1100 und einen Multiplexer 1110.

Die erste Erregerwechselspannungsquelle 400 umfasst die Sinus-Tabelle 1070, den Modulator 1080 und einen Tiefpassfilter 2000, der außerhalb des FPGA 1000 vorgesehen ist. Die zweite Erregerwechselspannungsquelle 500 umfasst entsprechend die Sinus-Tabelle 1090, den Modulator 1100 und einen Tiefpassfilter 2010.

Die Zustandssteuereinheit 1010 steuert die Multiplexer 1020, 1060 und 1110 geeignet an und versorgt den Zähler 450 mit einem Zählertakt. Die Multiplexer 1020 und 1060 empfangen an ihren Eingängen jeweils ein Signal sowie das mit dem Faktor -1 multiplizierte Signal und geben an ihrem Ausgang entweder das Signal oder das invertierte Signal aus. In Abhängigkeit vom Ausgangssignal des Multiplexers 1110 stellt sich eine Phasenverschiebung von 90° oder 270° zwischen der zweiten Erregerwechselspannung UE2 und der ersten Erregerwechselspannung UE1 ein.

Bei der in Fig. 2 gezeigten Ausführungsform wird die Phase der Rotorwechselspannung UR durch Ändern der jeweiligen Phasen der Erregerwechselspannungen UE1 und UE2 derart eingestellt, dass diese phasengleich zum Ausgabesignal des Zählers 450 ist, d.h. ein Ausgabesignal bzw. Ausgabewert des Latch 800 wird auf den Wert 0 geregelt. Auf diese Weise werden Phasensprünge der Rotorwechselspannung UR beim Umschalten der Phasenbeziehung zwischen den Erregerwechselspannungen UE1 und UE2 von 90° auf 270° bzw. von 270° auf 90° minimiert. Nachfolgend wird ein Betrieb der in Fig. 2 gezeigten Vorrichtung detailliert beschrieben.

An einem Ausgang ① des Zählers 450 steht ein Zählersignal $\varphi$ an. Das Zählersignal $\varphi$ ist eine Zahlenfolge, die beispielsweise beginnend bei einem Wert 0 in Einer-Schritten bis zu einem maximalen Zählerwert ansteigt und bei Zählerüberlauf wieder den Wert 0 einnimmt, wobei der Zählerwertebereich einem Winkelbereich von $2\pi$ entspricht. Dieser Vorgang wiederholt sich periodisch.

An einem Punkt ② liegt ein Signal $\varphi$ + $\varphi$error an. An einem Punkt ③ liegt bei einer ersten Stellung des Multiplexers 1060 ein Signal $\varphi$ + $\varphi$error + $\varphi$rotor_out an. Am einem Punkt ④, d.h. dem Ausgang der ersten Erregerwechselspannungsquelle, wird folglich das Signal sin($\varphi$ + $\varphi$error + $\varphi$rotor_out) ausgegeben. An einem Punkt ⑤ steht ein Signal $\varphi$ +

φerror + φrotor_out - π/2 an, wodurch am Punkt ⑥, d.h. dem Ausgang der zweiten Erregerwechselspannungsquelle 500, das Signal sin(φ + φerror und + φrotor_out - π/2) ausgegeben wird. Die Rotorwechselspannung UR an einem Punkt ⑦ ergibt sich folglich zu sin(φrotor_out - φrotor + φerror + φ).

Wenn die Zustandssteuereinheit 1010 die Multiplexer 1020, 1060 und 1110 alternativ ansteuert, um die Phasenverschiebung zwischen den Erregerwechselspannungen UE1 und UE2 zu verändern, ergibt sich am Punkt ①das Signal φ, am Punkt ② das Signal φ + φerror, am Punkt ③ das Signal φ+ φperror - φrotor_out, am Punkt ④ das Signal sin(φ + φerror - φrotor_out), am Punkt ⑤ das Signal φ + φerror - φrotor_out + π/2, am Punkt ⑥ das Signal sin(φ + φerror - φrotor_out + π/2) und am Punkt ⑦ das Signal sin(- φrotor_out + φrotor + φerror + φ).

Am Ausgang ⑧ des Latch 800 ergibt sich bei der ersten Multiplexerstellung das Signal φrotor_out - φrotor + φerror + φerror_ext und bei der zweiten Multiplexerstellung -φrotor_out + φrotor + φerror + φerror_ext. Die Größe φerror_ext bezeichnet hierbei einen durch externe Einflüsse hervorgerufenen Phasenfehler, beispielsweise aufgrund von Temperaturschwankungen.

An einem Eingang ⑨ des PI-Glieds 1030 steht bei der ersten Multiplexerstellung das Signal φrotor_out - φrotor + φerror + φerror_ext und bei der zweiten Multiplexerstellung das Signal φrotor_out - φrotor - φerror - φerror_ext an.

Aufgrund der geschlossenen Regelkreisstruktur mit I-Anteilen wird sowohl das Signal am Punkt ⑧ als auch das Signal am Punkt ⑨ stationär auf einen Wert von 0 eingeregelt.

Bei der gezeigten Struktur sind zwei Regelschleifen, jeweils mit I-Anteilen, einander überlagert. Die Regelschleife mit dem I-Glied 1040 bildet eine im Vergleich zur Regelschleife mit dem PI-Glied 1030 und dem I-Glied 1050 langsame, überlagerte Regelschleife, die hochfrequente Phasensprünge der Rotorwechselspannung UR, die beim Umschalten der Erregerwechselspannungen UE1 und UE2 von 90° Phasendifferenz auf 270° Phasendifferenz und umgekehrt auftreten und die durch Laufzeiteffekte verursacht sind, mit großer Zeitkonstante aufintegriert, bis im stationären Fall kein Phasensprung der Rotorwechselspannung UR beim Umschalten der Erregerwechselspannungen UE1 und UE2 mehr auftritt, da der Ausgang des I-Glieds 1040 zu einer dauerhaft veränderten Phasenlage der Erregerwechselspannungen UE1 und UE2 derart führt, dass die Laufzeiteffekte kompensiert sind.

Das Signal φrotor_out bildet den tatsächlichen Rotorwinkel der rotierenden Welle ab, wobei Laufzeiteffekte durch das periodische Umschalten der Phasenverschiebung zwischen den Erregerwechselspannungen UE1 und UE2 von 90° auf 270° bzw. 270° auf 90° in Verbindung mit der überlagerten Phasenfehlerregelschleife umfassend das I-Glied 1040 kompensiert werden.

Die gezeigten Ausführungsformen ermöglichen eine zuverlässige Bestimmung des Rotorwinkels unabhängig von Laufzeiteffekten.


**Patentansprüche**

1. Verfahren zum Bestimmen eines Rotorwinkels (φrotor) einer rotierenden Welle mittels eines Resolvers, wobei der Resolver umfasst:

  - eine erste Statorwicklung (100),
  - eine zweite Statorwicklung (200), deren Wicklungsachse (201) zur Wicklungsachse (101) der ersten Statorwicklung in einem rechten Winkel steht, und
  - eine Rotorwicklung (300), die mit der rotierenden Welle drehfest verbunden ist,

  mit den Schritten:

  a) Beaufschlagen der ersten Statorwicklung mit einer ersten Erregerwechselspannung (UE1) mit einer Frequenz und einer ersten Phase und Beaufschlagen der zweiten Statorwicklung mit einer zweiten Erregerwechselspannung (UE2) mit der Frequenz und einer zweiten Phase, wobei sich die erste Phase und die zweite Phase um 90° unterscheiden, und
  b) Messen mindestens eines ersten Phasenmesswerts einer Phase einer Rotorwechselspannung (UR), die in der Rotorwicklung durch die erste und die zweite Erregerwechselspannung induziert wird,

  **gekennzeichnet durch** die Schritte:

  c) Ändern der ersten Phase und/oder der zweiten Phase derart, dass sich die erste Phase und die zweite Phase um 270° unterscheiden,
  d) anschließendes Messen mindestens eines zweiten Phasenmesswerts der Rotorwechselspannung und
  e) Bestimmen des Rotorwinkels in Abhängigkeit von dem mindestens einen ersten Phasenmesswert und dem mindestens einen zweiten Phasenmesswert.

2. Verfahren nach Anspruch 1, **dadurch gekennzeichnet, dass** die Schritte a) und b) umfassen:

   a1) Ändern der ersten Phase und der zweiten Phase unter Beibehaltung der Phasenverschiebung von 90° zwischen der ersten und der zweiten Phase,
   b1) Messen eines zugehörigen ersten Phasenmesswerts,
   b2) Wiederholen der Schritte a1) und b1), bis der zugehörige erste Phasenmesswert 0° beträgt, und
   b3) Speichern der zugehörigen ersten Phase als ein erster Drehwinkel,

   die Schritte c) und d) umfassen:

   c1) Invertieren der ersten Phase und Ändern der zweiten Phase derart, dass sich die erste Phase und die zweite Phase um 270° unterscheiden,
   d1) Messen eines zugehörigen zweiten Phasenmesswerts,
   d2) Ändern der ersten Phase und der zweiten Phase unter Beibehaltung der Phasenverschiebung von 270° zwischen der ersten und der zweiten Phase,
   d3) Wiederholen der Schritte d1) und d2), bis der zugehörige zweite Phasenmesswert 0° beträgt, und
   d4) Speichern der zugehörigen ersten Phase als ein zweiter Drehwinkel, und

   der Schritt e) umfasst:

   e1) Berechnen des Rotorwinkels in Abhängigkeit von dem ersten und dem zweiten Drehwinkel.

3. Verfahren nach Anspruch 1, **dadurch gekennzeichnet, dass** in Schritt e) eine Differenz zwischen dem zweiten Phasenmesswert und dem ersten Phasenmesswert gebildet wird, wobei der Rotorwinkel in Abhängigkeit von der gebildeten Differenz berechnet wird.

4. Verfahren nach Anspruch 1 oder 3, **dadurch gekennzeichnet, dass** in Schritt c) die Phase der zweiten Erregerwechselspannung um 180° geändert wird.

5. Verfahren nach einem der vorhergehenden Ansprüche, **dadurch gekennzeichnet, dass** zwischen Schritt b) und c) aus dem ersten Phasenmesswert ein Rotorwinkel extrapoliert wird.

6. Vorrichtung zur Messung eines Rotorwinkels einer rotierenden Welle, insbesondere zur Durchführung des Verfahrens nach einem der Ansprüche 1 bis 5, umfassend:

   - eine erste Statorwicklung (100),
   - eine zweite Statorwicklung (200), deren Wicklungsachse (201) zur Wicklungsachse (101) der ersten Statorwicklung in einem rechten Winkel steht,
   - eine Rotorwicklung (300), die mit der rotierenden Welle drehfest verbunden ist,
   - eine erste Erregerwechselspannungsquelle (400), die dazu ausgebildet ist, eine erste Erregerwechselspannung (UE1) mit einer Frequenz und einer ersten Phase zu erzeugen, wobei die erste Statorwicklung mit der ersten Erregerwechselspannung beaufschlagt ist,
   - eine zweite Erregerwechselspannungsquelle (500), die dazu ausgebildet ist, eine zweite Erregerwechselspannung (UE2) mit der Frequenz und einer zweiten Phase zu erzeugen, wobei sich die erste Phase und die zweite Phase um 90° unterscheiden und die zweite Statorwicklung mit der zweiten Erregerwechselspannung beaufschlagt ist, und
   - eine Messeinrichtung (600, 700, 800), die dazu ausgebildet ist, mindestens einen ersten Phasenmesswert einer Phase einer Rotorwechselspannung (UR), die in der Rotorwicklung durch die erste und die zweite Erregerwechselspannung induziert wird, zu messen,
   **dadurch gekennzeichnet, dass**
   - die erste Erregerwechselspannungsquelle und/oder die zweite Erregerwechselspannungsquelle dazu ausgebildet ist/sind, die erste Phase und/oder die zweite Phase derart zu ändern, dass sich die erste Phase und die zweite Phase um 270° unterscheiden,
   - die Messeinrichtung dazu ausgebildet ist, anschließend mindestens einen zweiten Phasenmesswert der Rotorwechselspannung zu messen, und
   - eine Berechungseinrichtung (900) vorgesehen ist, die dazu ausgebildet ist, den Rotorwinkel in Abhängigkeit von dem ersten Phasenmesswert und dem zweiten Phasenmesswert zu berechnen.

**Claims**

1. A method for determining a rotor angle (φrotor) of a rotating shaft by means of a resolver, the resolver comprising:

   - a first stator winding (100),
   - a second stator winding (200), whose winding axis (201) is at right angle with respect to the winding axis (101) of the first stator winding, and
   - a rotor winding (300), which is connected to the rotating shaft in a rotatably fixed manner,

   including the steps:

   a) applying a first exciter alternating current (AC) voltage (UE1) having a frequency and a first phase to the first stator winding and applying a second exciter AC voltage (UE2) having the frequency and a second phase to the second stator winding, the first phase and the second phase differing by 90°, and
   b) measuring at least one first phase measured value of a phase of a rotor AC voltage (UR) induced in the rotor winding by the first and the second exciter AC voltages,

   **characterized by** the steps:

   c) varying the first phase and/or the second phase such that the first phase and the second phase differ by 270°,
   d) subsequent measuring of at least one second phase measured value of the rotor AC voltage, and
   e) determining the rotor angle in response to the at least one first phase measured value and the at least one second phase measured value.

2. The method according to claim 1, **characterized in that** the steps a) and b) comprise:

   a1) varying the first phase and the second phase while maintaining the phase shift of 90° between the first and the second phase,
   b1) measuring of a corresponding first phase measured value,
   b2) repeating the steps a1) and b1), until the corresponding first phase measured value is 0°, and
   b3) storing the corresponding first phase as a first angle of rotation,

   the steps c) and d) comprise:

   c1) inverting the first phase and varying the second phase such that the first phase and the second phase differ by 270°,
   d1) measuring of a corresponding second phase measured value,
   d2) varying the first phase and the second phase while maintaining the phase shift of 270° between the first and the second phase,
   d3) repeating the steps d1) and d2), until the corresponding second phase measured value is 0°, and
   d4) storing the corresponding first phase as a second angle of rotation, and

   the step e) comprises:

   e1) calculating the rotor angle in response to the first and the second angles of rotation.

3. The method according to claim 1, **characterized in that** in step e) a difference between the second phase measured value and the first phase measured value is evaluated, wherein the rotor angle is calculated in response to the obtained difference.

4. The method according to claim 1 or 3, **characterized in that** in step c) the phase of the second exciter AC voltage is varied by 180°.

5. The method according to any one of the preceding claims, **characterized in that** in between the steps b) and c) a rotor angle is extrapolated from the first phase measured value.

6. A device for measuring a rotor angle of a rotating shaft, in particular for implementing the method according to any one of the claims 1 to 5, comprising:

- a first stator winding (100),
- a second stator winding (200), whose winding axis (201) is at right angle with respect to the winding axis (101) of the first stator winding,
- a rotor winding (300), which is connected to the rotating shaft in a rotatably fixed manner,
- a first exciter alternating current (AC) voltage source (400) configured to generate a first exciter AC voltage (UE1) having a frequency and a first phase, wherein the first exciter AC voltage is applied to the first stator winding,
- a second exciter AC voltage source (500) configured to generate a second exciter AC voltage (UE2) having the frequency and a second phase, wherein the first phase and the second phase differ by 90° and the second exciter AC voltage is applied to the second stator winding, and
- a measuring device (600, 700, 800) configured to measure at least one first phase measured value of a phase of a rotor AC voltage (UR) induced in the rotor winding by the first and the second exciter AC voltages,
**characterized in that**
- the first exciter AC voltage source and/or the second exciter AC voltage source is/are configured to vary the first phase and/or the second phase such that the first phase and the second phase differ by 270°,
- the measuring device is configured to measure subsequently at least one second phase measured value of the rotor AC voltage, and
- a calculating device (900) is provided and configured to calculate the rotor angle in response to the first phase measured value and the second phase measured value.

**Revendications**

1. Procédé de détermination d'un angle de rotor (φrotor) d'un arbre en rotation à l'aide d'un résolveur, le résolveur comprenant :

   - un premier enroulement de stator (100),
   - un deuxième enroulement de stator (200), dont l'axe d'enroulement (201) se trouve à un angle droit par rapport à l'axe d'enroulement (101) du premier enroulement de stator, et
   - un enroulement de rotor (300) qui est relié solidaire en rotation avec l'arbre en rotation,

   le procédé comprenant les étapes suivantes :

   a) application au premier enroulement de stator d'une première tension alternative d'excitation (UE1) ayant une fréquence et une première phase et application au deuxième enroulement de stator d'une deuxième tension alternative d'excitation (UE2) ayant la fréquence et une deuxième phase, la première phase et la deuxième phase présentant une différence de 90°, et
   b) mesure d'au moins une première valeur mesurée de phase d'une phase d'une tension alternative de rotor (UR), laquelle est induite dans l'enroulement de rotor par la première et la deuxième tensions alternatives d'excitation,

   **caractérisé par** les étapes suivantes :

   c) modification de la première phase et/ou de la deuxième phase de telle sorte que la première phase et la deuxième phase présentent une différence de 270°,
   d) ensuite mesure d'au moins une deuxième valeur mesurée de phase de la tension alternative de rotor et
   e) détermination d'un angle de rotor en fonction de l'au moins une première valeur mesurée de phase et de l'au moins une deuxième valeur mesurée de phase.

2. Procédé selon la revendication 1, **caractérisé en ce que**
   les étapes a) et b) comprennent :

   a1) modification de la première phase et de la deuxième phase en conservant le déphasage de 90° entre la première et la deuxième phases,
   b1) mesure d'une première valeur mesurée de phase associée,
   b2) répétition des étapes a1) et b1) jusqu'à ce que la première valeur mesurée de phase associée soit égale à 0°, et
   b3) mise en mémoire de la première phase associée en tant que premier angle de rotation,

les étapes c) et d) comprennent :

c1) inversion de la première phase et modification de la deuxième phase de telle sorte que la première phase et la deuxième phase présentent une différence de 270°,

d1) mesure d'une deuxième valeur mesurée de phase associée,

d2) modification de la première phase et de la deuxième phase en conservant le déphasage de 270° entre la première et la deuxième phases,

d3) répétition des étapes d1) et d2) jusqu'à ce que la deuxième valeur mesurée de phase associée soit égale à 0°, et

d4) mise en mémoire de la première phase associée en tant que deuxième angle de rotation, et

l'étape e) comprend :

e1) calcul de l'angle de rotor en fonction du premier et du deuxième angles de phase.

3. Procédé selon la revendication 1, **caractérisé en ce qu'**à l'étape e) est formée une différence entre la deuxième valeur mesurée de phase et la première valeur mesurée de phase, l'angle de rotor étant calculé en fonction de la différence formée.

4. Procédé selon la revendication 1 ou 3, **caractérisé en ce qu'**à l'étape c), la phase de la deuxième tension alternative d'excitation est modifiée de 180°.

5. Procédé selon l'une des revendications précédentes, **caractérisé en ce qu'**entre les étapes b) et c), un angle de rotor est extrapolé à partir de la première valeur mesurée de phase.

6. Dispositif destiné à mesurer un angle de rotor d'un arbre en rotation, notamment destiné à mettre en oeuvre un procédé selon l'une des revendications 1 à 5, comprenant :

- un premier enroulement de stator (100),
- un deuxième enroulement de stator (200), dont l'axe d'enroulement (201) se trouve à un angle droit par rapport à l'axe d'enroulement (101) du premier enroulement de stator,
- un enroulement de rotor (300) qui est relié solidaire en rotation avec l'arbre en rotation,
- une première source de tension alternative d'excitation (400) qui est configurée pour générer une première tension alternative d'excitation (UE1) ayant une fréquence et une première phase, le premier enroulement de stator étant alimenté par la première tension alternative d'excitation,
- une deuxième source de tension alternative d'excitation (500) qui est configurée pour générer une deuxième tension alternative d'excitation (UE2) ayant la fréquence et une deuxième phase, la première phase et la deuxième phase présentant une différence de 90° et le deuxième enroulement de stator étant alimenté par la deuxième tension alternative d'excitation, et
- un dispositif de mesure (600, 700, 800) qui est configuré pour mesurer au moins une première valeur mesurée de phase d'une phase d'une tension alternative de rotor (UR), laquelle est induite dans l'enroulement de rotor par la première et la deuxième tensions alternatives d'excitation,
**caractérisé en ce que**
- la première source de tension alternative d'excitation et/ou la deuxième source de tension alternative d'excitation est/sont configurée(s) pour modifier la première phase et/ou la deuxième phase de telle sorte que la première phase et la deuxième phase présentent une différence de 270°,
- le dispositif de mesure est configuré pour mesurer ensuite au moins une deuxième valeur mesurée de phase de la tension alternative de rotor et
- il est prévu un dispositif de calcul (900) qui est configuré pour calculer l'angle de rotor en fonction de la première valeur mesurée de phase et de la deuxième valeur mesurée de phase.

# Fig.1

# Fig.2

**EP 2 291 618 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0285878 A1

- GB 2001222 A